(19) Europäisches Patentamt
European Patent Office
Office européen des brevets

(11) Veröffentlichungsnummer: **0 126 024**
**B1**

(12) # EUROPÄISCHE PATENTSCHRIFT

(45) Veröffentlichungstag der Patentschrift: **22.03.89**

(51) Int. Cl.⁴: **A 01 N 43/78**

(21) Anmeldenummer: **84810173.9**

(22) Anmeldetag: **09.04.84**

(54) **Verfahren zur Schädlingsbekämpfung.**

(30) Priorität: **14.04.83 CH 2002/83**

(43) Veröffentlichungstag der Anmeldung: **21.11.84 Patentblatt 84/47**

(45) Bekanntmachung des Hinweises auf die Patenterteilung: **22.03.89 Patentblatt 89/12**

(84) Benannte Vertragsstaaten: **AT BE CH DE FR IT LI LU NL SE**

(56) Entgegenhaltungen: **FR-A-2 310 350** **GB-A-1 505 020**

(73) Patentinhaber: **CIBA-GEIGY AG, Klybeckstrasse 141, CH-4002 Basel (CH)**

(72) Erfinder: **Schmid, Wolfgang, Birsmattweg 32, CH-4106 Therwil (CH)**

**EP 0 126 024 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die vorliegende Erfindung betrifft die Verwendung von 2-(2,4-Dimethylphenylimino)-3-methylthiazolin sowie seiner Säureadditionssalze zur Herstellung eines Bienenmilbenbekämpfungsmittels zur Anwendung in der Bekämpfung von auf Bienen parasitierenden Milben.

Durch Milben, wie Varroa jacobsoni, Acarapis woodi oder Tropilaelaps clavea, hervorgerufene seuchenartige Erkrankungen und Schädigungen von Bienenvölkern sind in den letzten Jahren zu einer ernsten Bedrohung des Bienenbestandes in vielen Teilen der Welt geworden und haben bereits zu beträchtlichen, volkswirtschaftlich ins Gewicht fallenden Einbussen an Honigerträgen geführt. Es hat deshalb nicht an Versuchen gefehlt, Wirkstoffe zu finden und Methoden zu entwickeln, um eine Eindämmung dieser durch Milben bedingten Schädigungen der Bienen zu erreichen. So sind bereits eine Reihe von chemischen Substanzen auf ihre Eignung zur Bekämpfung von Bienenmilben überprüft worden (vgl. N.Z.J. Exp. Agriculture 5, 2 (1977) 185–187). Die bisher bekannt gewordenen Methoden zur Bekämpfung von Bienenparasiten haben sich jedoch in der Praxis als wenig befriedigend und den gestellten Ansprüchen unzureichend erwiesen.

Überraschenderweise wurde nun gefunden, daß die Verbindung 2-(2,4-Dimethylphenylimino)-3-methylthiazolin und deren Salze zur erfolgreichen Bekämpfung von Milben, die speziell auf Bienen, also auf Insekten parasitieren, in besonderem Maße geeignet sind. Es wurde ferner festgestellt, daß diese Wirkstoffe besonders gegen die gefährlichen Bienenmilben vom Varroa-Typ, vor allem gegen Varroa jacobsoni, dem Erreger der Bienenseuche Varroatose, wirksam sind.

Unter den erfindungsgemäß als Wirkstoff verwendeten Säureadditionssalzen der Verbindung 2-(2,4-Dimethylphenylimino)-3-methylthiazolin sind Salze geeigneter anorganischer und organischer Säuren zu verstehen. Beispiele sind anorganische Säuren wie Fluorwasserstoffsäure, Chlorwasserstoffsäure, Bromwasserstoffsäure oder Jodwasserstoffsäure sowie Schwefelsäure, schwefelige Säure, Phosphorsäure, phosphorige Säure, Salpetersäure und organische Säuren wie Essigsäure, Trifluoressigsäure, Dichloressigsäure, Trichloressigsäure, Propionsäure, Buttersäure, Glykolsäure, Thiocyansäure, Milchsäure, Maleinsäure, Weinsäure, Bernsteinsäure, Zitronensäure, Benzoesäure, Zimtsäure, Oxalsäure, Ameisensäure, Benzolsulfonsäure, p-Toluolsulfonsäure, Methansulfonsäure, Salicylsäure, p-Aminosalicylsäure, 2-Phenoxybenzoesäure oder 2-Acetoxybenzoesäure.

Die erfindungsgemäß verwendete Verbindung 2-(2,4-Dimethylphenylimino)-3-methyl-thiazolin (= Verbindung I) ist eine bekannte Verbindung, die sowohl in der deutschen Patentschrift Nr. 2 619 724, der parallelen britischen Patentschrift Nr. 1 527 807 oder der parallelen US-Patentschrift Nr. 4 079 144 als akarizider Wirkstoff beschrieben ist. In den genannten Publikationen wird als akarizide Eigenschaft dieser Verbindung ihre Wirksamkeit gegen die Zeckenarten Amblyomma, Rhipicephalus und Boophilus beschrieben. Bei diesen Zeckenarten handelt es sich aber um solche Vertreter der Ordnung Acarina, die als Parasiten auf und von Säugetieren, wie beispielsweise Rindern und Schafen, leben. Es ist deshalb besonders überraschend und nicht vorhersehbar, daß die erfindungsgemäß verwendete Verbindung I unter den mehr als 30 000 bekannten Acarina-Arten auch gegen solche Milben wirksam ist, die einem extremen unterschiedlichen Lebensmilieu und Biotop zugeordnet sind. Nicht nur stellen Bienen gegenüber den bereits genannten Säugetieren völlig andersgeartete Wirtsorganismen dar, es muß das zu verwendende Präparat auch hochgradig bienenverträglich sein und darf keine insektiziden Eigenschaften besitzen, wie sie bei sehr vielen Akariziden parallel vorkommen. Überraschenderweise besitzt gerade die Verbindung I diese erforderliche Selektivität. Die Verbindung I und ihre Salze sind aber auch aufgrund ihrer speziellen biologischen Eigenschaften für die praktische Anwendung besonders gut geeignet. Sie besitzen eine systemische Wirkung, die ihre Verabreichung über die der Aufnahme von Nahrung und Flüssigkeit dienenden Organe der Bienen ermöglicht, um dann über die Hämolymphe der Bienen auf die saugenden Milben direkt toxisch einzuwirken. Hinzu kommt, daß die Verbindung I und ihre Salze von der Biene als Futter-Zusatz akzeptiert und nicht verschmäht werden, eine Eigenschaft, die gleichfalls nicht vorhersehbar ist. Somit bewirkt das unter Verwendung von 2-(2,4-Dimethylphenylimino)-3-methylthiazolin hergestellte Bienenmilbenbekämpfungsmittel bei seiner Anwendung gegen Bienenmilben, daß unter Ausnutzung des Nahrungsstroms von Biene zu Biene in sehr kurzer Zeit ein hoher Verteilungsgrad der Wirksubstanzen erreicht wird, was zu einer sehr raschen Abtötung aller auf den Bienen parasitierenden und sich aus deren Hämolymphe ernährenden Milben führt. Eine Kontaminierung der unmittelbaren Bienenumwelt mit dem verabreichten Wirkstoff I ist im übrigen ausgeschlossen, da die wieder gesundgewordenen Bienen ihren Verdauungstrakt nicht in den Bienen-Stock entleeren.

Aufgrund der günstigen Eigenschaften der erfindungsgemäß verwendeten Wirkstoffe (= Verbindung I und ihre Salze) kann man mit sehr geringen Stoffmengen bei der Bekämpfung der parasitären Milben auskommen, da diese gezielt mit den Wirksubstanzen in Kontakt kommen, was sowohl aus ökonomischen als auch aus ökologischen Gründen sehr vorteilhaft ist.

Zur Bekämpfung von auf Bienen parasitierenden Milben wird das von Milbenparasiten bedrohte bzw. befallene Bienenvolk mit der Verbindung 2-(2,4-Dimethylphenylimino)-3-methylthiazolin oder einem ihrer Säureadditionssalze behandelt. Unter Bedrohung wird hier und im folgenden auch der bereits eingetretene Milben-Befall verstanden, der die Lebensfähigkeit des Individuums und

die gesunde Entwicklung der Brut in Frage stellt. Die Behandlung der Bienen erfolgt durch Räuchern, Aufsprühen, Zerstäuben, Auftropfen oder Verfüttern des Wirkstoffes. Dazu werden die Wirkstoffe mit geeigneten Trägerstoffen und/oder Lösungsmitteln formuliert.

Als Darreichungsformen der unter Verwendung von
2-(2,4-Dimethylphenylimino)-3-methylthiazolin herstellbaren Mittel kommen in Frage:

Räucherstreifen, die neben dem Wirkstoff z.B. Kaliumnitrat und Cellulose enthalten.

Emulgierbare Konzentrate bestehen aus dem Wirkstoff und einem oder mehreren geeigneten, bienenverträglichen Lösungsmitteln wie z.B. Niederalkylester oder Triglyceride von natürlichen oder synthetischen Fettsäuren und geeignete, ionische oder nicht ionische Emulgatoren wie z.B. Nonylphenolpolyglykoläther, Alkylarylpolyglykoläther oder Phenylsulfonat. In manchen Fällen ist es vorteilhaft, Mischungen verschiedener Emulgatoren sowie Antischaummittel wie z.B. Silikone zu verwenden.

Mit Wasser verdünnbare Konzentrate bestehen aus dem Wirkstoff und einem oder mehreren bienenverträglichen Lösungsmitteln wie z.B. Wasser, verdünnte Säuren, Ketone wie Aceton, Alkohole wie Äthanol, Glykole, Polyäthylenglykole oder deren Derivate und Propylenglykol sowie Milchsäureäthylester, Dimethylformamid oder ähnliche Lösungsmittel, die noch zusätzlich Tenside enthalten können.

Benetzbare bzw. dispergierbare und lösliche Pulver bestehend aus dem Wirkstoff und einem oder mehreren Trägerstoffen, wie Kaolin, Talkum gefällte Kieselsäure, Bentonit, Natrium-Kalium-Aluminium-Silikate, Adipinsäure, Citronensäure, Zucker und Natriumcarbonat sowie ionischen oder nicht ionischen oberflächenaktiven Dispergiermitteln.

In den Mitteln beträgt der Anteil an Wirkstoff 0,01 bis 40 Gewichtsprozent, insbesondere 0,1 bis 8 Gewichtsprozent.

Besonders vorteilhaft ist die Bekämpfung der Bienenmilben durch Verabreichung der Wirkstoffe oder der sie enthaltenden Mittel auf dem Weg der Nahrungsaufnahme an die Bienen. Dabei werden der Bienennahrung angepaßte, die Wirkstoffe enthaltende Nährlösungen, beispielsweise Zuckerlösungen, verfüttert, indem man sie als Winterfutter oder in einer Art Reizfütterung den Bienen verabreicht.

Eine weitere vorteilhafte Methode, die vor allem der sehr schnellen Aufnahme der Wirkstoffe durch die Bienen dient, ist die Benetzung eines Teils des Bienenvolks mit der Wirkstofflösung. Das Benetzen der Bienen kann durch Auftropfen oder durch Besprühen erfolgen. Gemäß dem artspezifischen Verhalten der Bienen, lecken sich die nassen Bienen innerhalb weniger Minuten gegenseitig trokken, so daß der Wirkstoff rasch in die Honigblase gelangt und über den Stoffkreislauf des Bienenvolkes in kurzer Zeit alle Bienen erreicht. Die Benetzungsmethode kann in sehr praktischer Weise durch Auftropfen der Wirkstofflösung von oben auf einen Teil der in den Wabengängen befindlichen Bienen erfolgen. Dabei ist es nicht notwendig, die Waben auseinander zu schieben, so daß die Behandlung sehr rasch und ohne wesentliche Störung der Bienen vonstatten geht. Auch die Feinverteilung einer Wirkstofflösung oder Wirkstoffemulsion im Bienenvolk mit Hilfe eines Mikro-Zerstäubungsapparats erzielt eine ausgezeichnete Kontaktwirkung.

Zur Behandlung eines Bienenvolkes werden je nach Anwendungsform Wirkstoffkonzentrationen von 100 bis 20 000 ppm (g/g), vorzugsweise von 600 bis 6000 ppm (g/g), verwendet. Werden Wirkstofflösungen verabreicht, so beträgt deren Volumen pro Bienenvolk im allgemeinen 20 bis 5000 ml pro Behandlung.

Grundsätzlich kann die Wirkstoffapplikation im Bienenstock präventiv erfolgen, also noch bevor ein sichtbarer Milbenbefall besteht. Mit dieser Maßnahme wird die Hämolymphe der Bienen mit Spuren des Wirkstoffs so weit angereichert, daß eine außerhalb des Bienenstocks erworbene Milbeninfektion einzelner Tiere die Vermehrung dieser Parasiten im Stock verhindert.

Beispiel 1

Fütterungsmethode im Laboratorium

30 von Varroa-Milben befallene Bienen wurden einzeln mit je 10 µl einer zuckerhaltigen Lösung von
2-(2,4-Dimethylphenylimino)-3-methylthiazolin gefüttert. Der Wirkstoff war als 15%-ige Spritzpulver (= «wettable powder»)-Formulierung in das zur Fütterung bereitgestellte Zuckerwasser hineingegeben worden. Nach der Fütterung wurden die Bienen in Gruppen zu je 10 für 7 Tage in Käfigen gehalten. Anschließend wurden die Bienen getötet. Die im Laufe des Versuchs abgefallenen bzw. getöteten Milben wurden auf unterhalb der einzelnen Käfige befindlichen Unterlagen gesammelt. Die Bienen selbst wurden auf verbliebene Milben untersucht. Die Zählung der abgefallenen bzw. der verbliebenen Milben wurde nach 7 Tagen durchgeführt.

Ergebnis:

| Milben | Milben abgefallen | Abtötung in % |
|---|---|---|
| 35 | 34 | 97 |

Beispiel 2

Benetzungsmethode im Bienenstock

6 brutfreie mit Varroa-Milben infizierte Ableger (Kleinvölker) wurden dreimal im Abstand von 4 Tagen mit einer 0,5%-igen wässrigen Lösung von
2-(2,4-Dimethylphenylimino)-3-methylthiazolin behandelt. Der Wirkstoff wurde in Form einer Konzentratformulierung in Wasser gelöst. 5 ml der Wirkstofflösung wurden auf einige wenige in den Wabengassen eines Bienenstocks befindliche Bienen geträufelt. Der Versuch wurde 4 Tage nach

der letzten Behandlung, also nach 12 Tagen Dauer beendet. Die im Laufe des Tests abgestorbenen Milben und Bienen wurden auf einer vor Beginn des Versuchs unter den Bienensitz geschobenen und mit einer Gaze gesicherten Bodeneinlage gesammelt. Bei Versuchsende wurden die Bienen getötet, die auf ihnen verbliebenen Milben in Benzin ausgewachen und diese gezählt. Zur Auswertung wird die Zahl der im Laufe des Versuchs gesammelten toten Milben und Bienen bestimmt, wobei zu beachten ist, daß für die Zeitdauer des Versuchs mit einer natürlichen Sterberate von ca. 0,5% Bienen zu rechnen ist.

Ergebnis:

| abgestorbene Organismen in % | |
|---|---|
| Milben | Bienen |
| 91,8 | 0,4 |

Beispiel 3
Versuche unter natürlichen Bedingungen

33 brutfreie, mit Varroa-Milben infizierte Bienenvölker (Vollvölker) wurden in drei Gruppen aufgeteilt und mit
2-(2,4-Dimethylphenylimino)-3-methylthiazolin
in unterschiedlicher verdünnter Formulierung, einmal aus einem 15%ig. Emulsionskonzentrat (EC-15) und einmal aus einem 15%ig. wasserlöslichen Pulver (SP-15) stammend, behandelt. Im letzteren Falle lag der Wirkstoff I als Salz vor (s. Formulierungsbeispiele).

Alle drei Gruppen A, B und C, die aus je 11 Völkern bestanden, erhielten im Behandlungszeitraum die gleiche Gesamtmenge an Wirkstoff.

Im folgenden werden die Aufwandmengen pro Wabengasse angegeben. Ein Bienenstock enthält, je nach Größe des Volks, zwischen 5 und 15 Wabengassen. Dementsprechend wird die Wirkstoffmenge von Stock zu Stock dosiert.

A) 11 Bienenvölker – Topikale Applikation

Je 5 ml einer 4%igen wäßrigen Lösung bzw. Emulsion wurden je Wabengasse auf einige ausgewählte Bienen versprüht. Die übrigen Bienen sorgten für eine gleichmäßige Verteilung des Wirkstoffs im Volk. Die Prozedur dieser partiellen Benetzung wurde nach 7 und nach 14 Tagen wiederholt.

B) 11 Bienenvölker – Orale Langzeit-Applikation

Eine 0,4%ige Wirkstoff-Lösung bzw. -Emulsion in Zuckerwasser wurde den Bienen zur oralen Aufnahme 30 Stunden lang in einer auf dem Bienenstock befindlichen Futterflasche angeboten. Die Flüssigkeitsmenge im Gefäß entsprach 50 ml pro Wabengasse des betreffenden Bienenstocks. Dieses Angebot wurde nach 7 und nach 14 Tagen wiederholt.

C) 11 Bienenvölker – Dauerfütterung

200 ml einer 0,3%igen Wirkstoff-Lösung bzw. -Emulsion pro Wabengasse wurden dem Bienenvolk 14 Tage lang aus dem Futterbehälter angeboten.

Die während und nach der Behandlung abgestorbenen Milben und Bienen wurden auf einer Bodeneinlage täglich gesammelt. 21 Tage nach der ersten Anwendung wurden die Bienenvölker und die Rest-Milbenzahl bestimmt.

| Formulierung | Applikationsform | Abgestorbene Organismen [%] | |
|---|---|---|---|
| | | Milben | Bienen |
| EC-15 | A-topikal | 99% | 4% |
| | B-oral | 98 | 0 |
| | C-oral | 96 | 1 |
| SP-15 | A-topikal | 99 | 0 |
| | B-oral | 94 | 0 |
| | C-oral | 97 | 0 |

Während 3 Wochen ist mit einer natürlichen Sterberate von ca. 1% der Bienen zu rechnen.

Formulierungsbeispiele
F-1: Emulsionskonzentrat (EC-15)
17,3 Vol.-Teile (= 15,9 Gew.-Teile) Wirkstoff
10,9 Vol.-Teile eines 1:1:1 Gemischs
bestehend aus
a) einem Kondensationsprodukt von 1 Mol 4-Isooctylphenol mit 8,2 Molen Äthylenoxid,
b) äthoxylierten Rizinusöl,
c) Phenylsulfonat,
und
71,8 Vol-Teile Äthyloleat
werden innig zu 100 ml Emulsionskonzentrat vermischt, das sich mit Wasser beliebig verdünnen und versprühen oder als Bienenfutter mit z.B. Zuckeranteilen verwenden läßt.

F-2: Wasserlösliches Pulver (SP-15)
19,0 Gew.-Teile Wirkstoff I (als Hydrochlorid oder Acetat)
1,0 Gew.-Teile hochdisperse pyrogene Kieselsäure
1,0 Gew.-Teile eines Kondensationsprodukts

aus 1 Mol 4-Isooctylphenol mit 8,2 Molen Äthylenoxyd,
20,0 Gew.-Teile Adipinsäure,
19,7 Gew.-Teile Puderzucker,
39,3 Gew.-Teile Normalzucker
werden homogenisiert und ergeben ein leicht wasserlösliches Pulver, das im Bienenstock appliziert oder verfüttert werden kann.

F-3: Wirkstoffkonzentrat
15 Gew.-Teile Wirkstoff,
20 Gew.-Teile Milchsäureäthylazetat und
35 Gew.-Teile Aqua dest.
werden gut miteinander vermischt. Man erhält ein mit Wasser verdünnbares Konzentrat.

F-4: Wirkstoffkonzentrat
15 Gew.-Teile Wirkstoff,
5 Gew.-Teile Nonylphenolpolyglykoläther,
5 Gew.-Teile Alkarylpolyglykoläther,
5 Gew.-Teile Phenylsulfonat und
70 Gew.-Teile Äthyloleat
werden gut miteinander vermischt. Man erhält ein emulgierbares Konzentrat, das sich mit Wasser verdünnen läßt.

F-5: Dispergierbares Pulver
15 Gew.-Teile Wirkstoff
20 Gew.-Teile Adipinsäure,
1 Gew.-Teile disperse Kieselsäure,
0,5 Gew.-Teile Nonylphenol-polyglykoläther und
63,5 Gew.-Teile Zuckergries
werden intensiv miteinander vermischt. Man erhält ein in Wasser dispergierbares Pulver.

F-6: Räucherstreifen
400 Gew.-Teile Wirkstoff und
143 Gew.-Teile Kaliumnitrat
werden zusammengeschmolzen und die Schmelze auf 550 Gew.-Teile Löschkarton aufgetragen. Nach dem Erkalten der Schmelze wird die Kartonfläche in Streifen geschnitten. Solche Streifen verglimmen, je nach Länge, unter Rauchentwicklung während 5–10 Minuten.

Die chemische Herstellung des im erfindungsgemäßen Verfahren verwendeten Wirkstoffes 2-(2,4-Dimethylphenolimino)-3-methyl-thiazolin der Formel

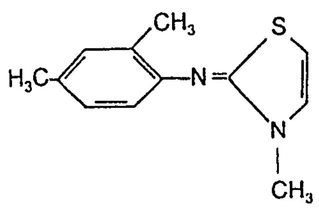

ist aus der bereits erwähnten Literatur (DE-PS 2 619 724; GB-PS 1 527 807; US-PS 4 079 144) bekannt und erfolgt durch Reaktion von N-(2,4-Dimethylphenyl)-N'-methylthioharnstoff und Chloracetaldehyd-diäthylacetal.

**Patentansprüche**

1. Verwendung von 2-(2,4-Dimethylphenylimino)-3-methylthiazolin oder einem seiner Säureadditionssalze zur Herstellung eines Bienenmilbenbekämpfungsmittels zur Anwendung in der Bekämpfung von auf Bienen parasitierenden Milben.

2. Verwendung gemäß Anspruch 1 von 2-(2,4-Dimethylphenylimino)-3-methylthiazolin oder einem seiner Säureadditionssalze zur Herstellung eines Bienenmilbenbekämpfungsmittels zur Anwendung in einem Verfahren zur Bekämpfung der auf Bienen parasitierenden Milben Varroa jacobsoni, Acarapis woodi oder Tropilaelaps clarea.

3. Verwendung gemäß Anspruch 1 von 2-(2,4-Dimethylphenylimino)-3-methylthiazolin oder einem seiner Säureadditionssalze zur Herstellung eines durch Auftropfen, Zerstäuben, Aufsprühen, Beräuchern oder Verfüttern an Bienen applizierbaren Bienenmilbenbekämpfungsmittels zur Anwendung in der Bekämpfung von auf Bienen parasitierenden Milben.

4. Verwendung gemäß Anspruch 1 von 2-(2,4-Dimethylphenylimino)-3-methylthiazolin oder einem seiner Säureadditionssalze zur Herstellung eines 2-(2,4-Dimethylphenylimino)-3-methylthiazolin oder eines seiner Säureadditionssalze in verdünnter Zuckerlösung enthaltenden Bienenmilbenbekämpfungsmittels zur Anwendung in der Bekämpfung von auf Bienen parasitierenden Milben.

5. Verwendung gemäß Anspruch 1 von 2-(2,4-Dimethylphenylimino)-3-methylthiazolin oder einem seiner Säureadditionssalze zur Herstellung eines 2-2,4-Dimethylphenilimino)-3-methylthiazolin oder eines seiner Säureadditionssalze in einer Konzentration von 100 bis 20 000 ppm enthaltenden Bienenmilbenbekämpfungsmittels zur Anwendung in der Bekämpfung von auf Bienen parasitierenden Milben.

6. Verwendung gemäß Anspruch 1 von 2-(2,4-Dimethylphenylimino)-3-methylthiazolin oder einem seiner Säureadditionssalze zur Herstellung eines 2-(2,4-Dimethylphenylimino)-3-methylthiazolin oder eines seiner Säureadditionssalze in einer Konzentration von 600 bis 6000 ppm enthaltenden Bienenmilbenbekämpfungsmittels zur Anwendung in der Bekämpfung von auf Bienen parasitierenden Milben.

**Claims**

1. The use of 2-(2,4-dimethylphenylimino)-3-methylthiazoline or one of its acid addition salts for the preparation of a composition for controlling bee mites that is to be used in the control of mites that parasitise bees.

2. The use according to claim 1 of 2-(2,4-dimethylphenylimino)-3-methylthiazoline

or one of its acid addition salts for the preparation of a composition for controlling bee mites that is to be used in a method of controlling the mites Varroa jacobsoni, Acarapis woodi or Tropilaelaps clarea which parasitise bees.

3. The use according to claim 1 of 2-(2,4-dimethylphenylimino)-3-methylthiazoline or one of its acid addition salts for the preparation of a composition for controlling bee mites that can be applied to bees by dropping, dusting, spraying, fumigating or feeding and that is to be used in the control of mites that parasitise bees.

4. The use according to claim 1 of 2-(2,4-dimethylphenylimino)-3-methylthiazoline or one of its acid addition salts for the preparation of a composition for controlling bee mites that contains 2-(2,4-dimethylphenylimino)-3-methylthiazoline or one of its acid addition salts in a dilute sugar solution and that is to be used in the control of mites that parasitise bees.

5. The use according to claim 1 of 2-(2,4-dimethylphenylimino)-3-methylthiazoline or one of its acid addition salts for the preparation of a composition for controlling bee mites that contains 2-(2,4-dimethylphenylimino)-3-methylthiazoline or one of its acid addition salts in a concentration of from 100 to 20,000 ppm and that is to be used in the control of mites that parasitise bees.

6. The use according to claim 1 of 2-(2,4-dimethylphenylimino)-3-methylthiazoline or one of its acid addition salts for the preparation of a composition for controlling bee mites that contains 2-(2,4-dimethylphenylimino)-3-methylthiazoline or one of its acid addition salts in a concentration of from 600 to 6,000 ppm and that is to be used in the control of mites that parasitise bees.

**Revendications**

1. Utilisation de la 2-(2,4-diméthylphénylimino)-3-méthylthiazoline ou de l'un de ses sels formés par addition avec un acide pour la préparation d'un produit destiné à combattre les acariens parasitant les abeilles.

2. Utilisation selon la revendication 1 de la 2-(2,4-diméthylphénylimino)-3-méthylthiazoline ou de l'un de ses sels formés par addition avec un acide pour la préparation d'un produit de lutte contre les acariens des abeilles destiné à être utilisé dans un procédé pour combattre les acariens Varroa jacobsoni, Acarapis woodi ou Tropilaelaps clarea, qui parasitent les abeilles.

3. Utilisation selon la revendication 1 de la 2-(2,4-diméthylphénylimino)-3-méthylthiazoline ou de l'un de ses sels formés par addition avec un acide pour la préparation d'un produit pour la lutte contre les acariens des abeilles applicable par gouttage, atomisation, pulvérisation, fumigation ou ingestion, pour l'utilisation dans la lutte contre les acariens parasitant les abeilles.

4. Utilisation selon la revendication 1 de la 2-(2,4-diméthylphénylimino)-3-méthylthiazoline ou de l'un de ses sels formés par addition avec un acide pour la préparation d'un produit de la lutte contre les acariens des abeilles contenant de la 2-(2,4-diméthylphénylimino)-3-méthylthiazoline ou l'un de ses sels formés par addition avec un acide dans une solution diluée de sucre pour l'utilisation dans la lutte contre les acariens parasitant les abeilles.

5. Utilisation selon la revendication 1 de la 2-(2,4-diméthylphénylimino)-3-méthylthiazoline ou de l'un de ses sels formés par addition avec un acide pour la préparation d'un produit de lutte contre les acariens des abeilles contenant de la 2-(2,4-diméthylphénylimino)-3-méthylthiazoline ou l'un de ses sels formés par addition avec un acide à une concentration de 100 à 20 000 ppm, pour l'utilisation dans la lutte contre les acariens parasitant les abeilles.

6. Utilisation selon la revendication 1 de la 2-(2,4-diméthylphénylimino)-3-méthylthiazoline ou de l'un de ses sels formés par addition avec un acide pour la préparation d'un produit de lutte contre les acariens des abeilles contenant de la 2-(2,4-diméthylphénylimino)-3-méthylthiazoline ou l'un de ses sels formés par addition avec un acide à une concentration de 600 à 6000 ppm pour l'utilisation dans la lutte contre les acariens parasitant les abeilles.